# FASCICULE DE BREVET EUROPEEN

(11) **EP 1 496 213 B1**
(45) Date de publication et mention de la délivrance du brevet: **04.04.2007**
(21) Numéro de dépôt: 04291630.4
(22) Date de dépôt: 29.06.2004
(51) Int. Cl.: F01N 7/18, F16L 27/10

(54) **Perfectionnements à un flexible de découplage pour ligne d'échappement d'un véhicule à moteur**
Verbesserung zu einem flexiblen Entkopplungselement für eine Auspuffanlage eines Kraftfahrzeugs
Improvement of a flexible decoupling joint for an exhaust gas line of a motor vehicle

(30) Priorité: 04.07.2003 FR 0308208
(43) Date de publication de la demande: 12.01.2005
(73) Titulaire: HUTCHINSON, 75008 Paris (FR)
(72) Inventeur: Simon, Jean-Michel, 92320 Chatillon (FR)
(74) Mandataire: Bolinches, Michel Jean-Marie

(56) Documents cités:
- EP-A- 0 432 436
- EP-A- 0 493 680
- EP-A- 0 974 741
- DE-A- 3 526 952
- FR-A- 2 835 018

## Description

L'invention concerne des perfectionnements apportés à un flexible de découplage qui est destiné à être monté dans une ligne d'échappement d'un véhicule à moteur.

Un flexible de découplage visé par les perfectionnements de l'invention est notamment décrit dans le document FR-0200738. Ce flexible comprend notamment une partie mécanique interne sous la forme d'un agrafé métallique, une partie intermédiaire formant une isolation thermique, et une partie étanchéité sous la forme d'une enveloppe externe centrale souple et deux coiffes d'extrémité métalliques qui sont fixées vers les deux extrémités de l'agrafé métallique.

Le flexible décrit dans le document EP 0 493 680 A comprend aussi une partie interne sous la forme d'un agrafé métallique, une isolation thermique et une enveloppe externe avec deux coiffes d'extrémité métalliques.

Un but de l'invention est de perfectionner un tel flexible de découplage, en particulier en ce qui concerne le mode de fixation des coiffes d'extrémité de la partie étanchéité sur l'agrafé métallique, une dégradation possible du matelas d'isolation thermique par l'agrafé métallique lors des déformations de flexible en cours de fonctionnement.

A cet effet, l'invention propose un perfectionnement à un flexible de découplage destiné à être monté dans une ligne d'échappement d'un véhicule à moteur, ce flexible comprenant une partie tubulaire interne souple sous la forme d'un agrafé métallique en contact avec le flux des gaz d'échappement, une partie intermédiaire d'isolation thermique et une partie externe d'étanchéité, ladite partie d'étanchéité comprenant une couche centrale souple et deux coiffes d'extrémité métalliques, qui est caractérisé en ce que chaque coiffe présente une partie centrale qui est fixée par serrage élastique sur l'agrafé.

D'une manière générale, le serrage élastique de la partie centrale de chaque coiffe peut être effectué soit ponctuellement autour de l'agrafé, soit d'une manière continue autour de l'agrafé.

Selon un mode de réalisation préférentiel, l'agrafé métallique d'une part et les parties d'extrémité des deux coiffes d'autre part, s'étendent respectivement sur une certaine longueur à l'intérieur et à l'extérieur des deux tubulures métalliques amont et aval entre lesquelles le flexible est monté, et les extrémités des coiffes sont également fixées sur les tubulures amont et aval par soudage par exemple.

Avantageusement, une chaussette de protection mécanique est montée entre l'agrafé et la partie d'isolation thermique, cette chaussette de protection pouvant s'étendre sur sensiblement toute la longueur de l'agrafé, et le serrage élastique de chaque coiffe sur l'agrafé s'effectue au travers de la chaussette.

D'une manière générale, la chaussette est souple et constituée par un tissu souple de fibres de céramique, et présente un diamètre inférieur à celui de l'agrafé pour être pincée sur celui-ci.

Avantageusement, la chaussette est tricotée sous la forme d'un tissu de type "Jersey" pour optimiser son rappel élastique.

Selon un avantage de l'invention, le serrage élastique des coiffes métalliques de l'enveloppe externe du flexible est une technique de fixation facile à réaliser, et qui, en limitant le flux thermique dans les coiffes, permet d'éviter d'équiper celle-ci avec des ailettes de refroidissement pour assurer une meilleure tenue thermique de la couche centrale de l'enveloppe externe qui est réalisée par une couche de silicone par exemple.

D'autres avantages, caractéristiques et détails de l'invention ressortiront du complément de description qui va suivre en référence aux dessins annexés, donnés uniquement à titre d'exemple et dans lesquels :
- la figure 1 est une demi-vue en coupe d'un flexible de découplage selon un mode de réalisation de l'invention ;
- la figure 2 est une vue en coupe partielle selon la ligne II-II de la figure 1 ;
- la figure 3 est une vue en coupe selon la figure III-III de la figure 2 ;
- la figure 4 est une demi-vue en coupe partielle d'un flexible de découplage selon une autre variante de réalisation de l'invention ; et
- la figure 5 est une vue en coupe d'un autre mode de réalisation de l'invention.

Un flexible de découplage 1 selon l'invention est monté entre une tubulure amont 3 du collecteur des gaz d'échappement en sortie du moteur du véhicule, et une tubulure aval 5 qui est par exemple reliée à l'entrée d'un pot catalytique ou catalyseur.

D'une façon connue en soi, le flexible de découplage 1 comprend notamment une partie tubulaire interne A qui est constituée d'un tube souple tel qu'un agrafé métallique 7, de préférence un agrafé double très lâche, une partie intermédiaire B d'isolation thermique qui est constituée d'un matelas isolant annulaire 9, et une partie externe d'étanchéité C qui est constituée d'une couche centrale souple 11 et de deux coiffes d'extrémité métalliques 13.

Chaque coiffe d'extrémité 13 peut être monobloc et se scinder en trois parties : une partie 13a qui va venir se fixer sur la tubulure amont 3 ou aval 5, une partie centrale 13b qui va venir se fixer sur l'agrafé 7, et une partie 13c qui va venir se fixer à une extrémité de la couche externe souple 11 du flexible 1.

La partie 13a des coiffes d'extrémité 13 est cylindrique et d'un diamètre interne légèrement supérieur au diamètre externe des tubulures amont 3 et aval 5, de manière à pouvoir s'y engager librement sur une longueur Lₒ et permettre sa fixation dans des conditions aisées par soudage ou au moyen d'une bride par exemple.

Un premier perfectionnement apporté au flexible de découplage concerne la partie centrale 13b des coiffes 13 qui est avantageusement déformée pour venir se fixer mécaniquement sur l'agrafé 7. D'une manière générale, comme chaque coiffe 13 vient recouvrir sur une certaine longueur la tubulure amont 3 et aval 5, on peut avantageusement assurer une fixation de chaque coiffe 13 par un serrage élastique sur l'agrafé 7. Ce serrage élastique a pour avantage de ne pas se détériorer en fonctionnement mais bien au contraire de s'accroître dès l'instant où l'agrafé métallique 7 se dilate plus que les coiffes 13 qui restent à une température modéré. Un serrage élastique peut être obtenu, soit d'une manière discontinue ou ponctuelle, soit d'une manière continue.

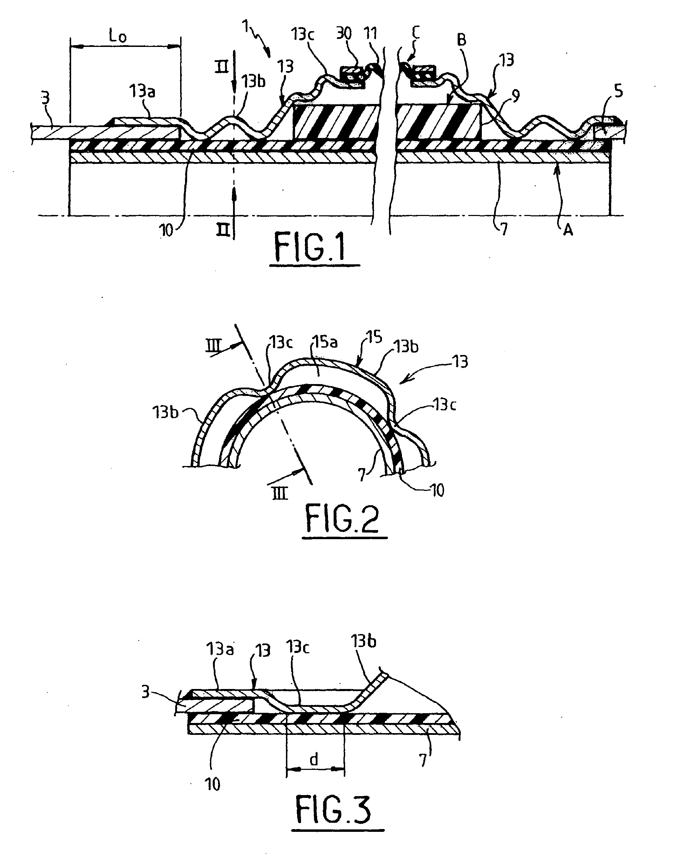

Selon un premier mode de réalisation illustré à la figure 2, le serrage élastique de la partie centrale 13a des coiffes 13 sur l'agrafé 7 est de type ponctuel. A cet effet, on comprime verticalement vers l'intérieur la partie centrale 13b qui a une forte inertie de section, de manière à créer des ondes 15 par exemple. Ces ondes 15, au niveau de leurs creux sont en contact avec l'agrafé 7 et présentent une réserve élastique circonférentielle sous la forme de poches ou enfoncements 15a qui peuvent être régulièrement espacés les uns des autres tout autour de l'agrafé 7. En fonctionnement, les parties centrales 13b des coiffes 13 flambent et se plastifient, alors que l'agrafé 7 n'a pas perdu sa réserve élastique. Sur le plan thermique, un serrage élastique discontinu en plusieurs points 13c, trois par exemple, permet de limiter les points de passage de conduction thermique de la chaleur vers les coiffes 13.

Par ailleurs, comme cela est illustré sur la figure 3, on aura avantage à ce que les zones de serrage ponctuels 13c s'étendent longitudinalement sur une longueur d supérieure à celle d'un pas de l'enroulement hélicoïdal formé par l'agrafé 7, de façon à comprimer plusieurs enroulements pour limiter les risques de dégrafage éventuel de l'agrafé sur l'effet du poinçonnement.

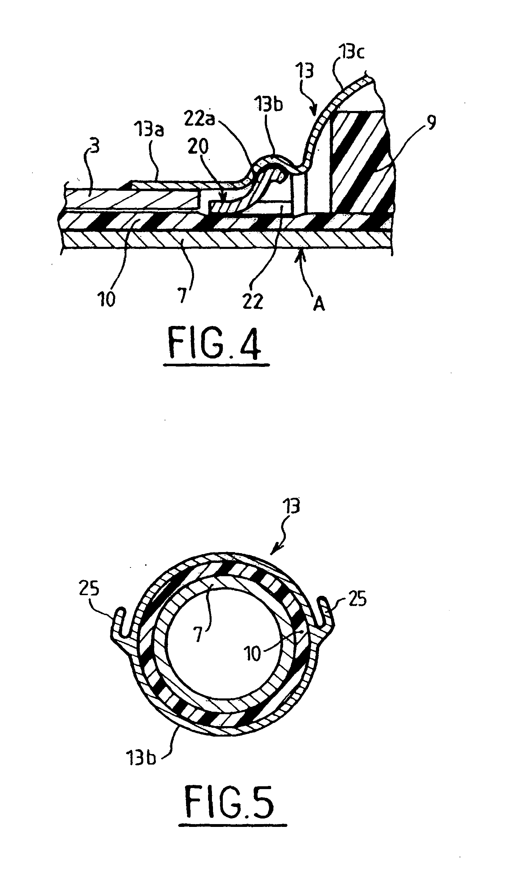

Une variante de réalisation est représentée sur la figure 4 et dans lequel chaque coiffe 13 est fixée sur l'agrafé 7 grâce à un système de clips 20. Chaque clip 20 se présente sous la forme d'une bague métallique 22 en acier inoxydable par exemple. La bague 22 soit sertie sur l'agrafé 7, soit fendue de façon à pouvoir être ouvert en force pour sa mise en place sur l'agrafé 7, et elle est munie de protubérances radialement externes 22a qui servent à fixer chaque coiffe 13 en venant se loger dans les creux des ondulations 15 qui sont formées dans la partie centrale 13b des coiffes 13.

Selon un second mode de réalisation illustré à la figure 5, le serrage élastique de la partie centrale 13b des coiffes 13 sur l'agrafé 7 est de type continu. A cet effet, on conforme la partie centrale 13b de chaque coiffe 13 au diamètre extérieur de l'agrafé 7 pour qu'ils soient en contact l'un avec l'autre, et on crée des réserves élastiques 25 à la périphérie de la partie centrale 13b qui peuvent être pincées ou rabattues lors de l'opération de fabrication des coiffes. Dans l'exemple illustré à la figure 5, deux réserves élastiques 25 sont rabattues et sensiblement diamétralement opposées.

La partie 13c des coiffes 13 assure une fonction de dissipation de chaleur et peut être avantageusement de forme ondulée pour augmenter cette dissipation. L'extrémité libre des coiffes 13 est fixée par un collier de serrage 30 par exemple à une extrémité de la couche externe 11. Cette couche externe 11 peut être réalisée sous la forme d'un soufflet en silicone renforcé par exemple.

Un autre perfectionnement apporté à ce flexible de découplage concerne également un moyen de protection mécanique tel une chaussette 10 par exemple qui est montée entre l'agrafé 7 et le matelas isolant 9. Cette chaussette 10 qui est constituée d'un tissage de fibres céramique par exemple permet de protéger le matelas isolant 9 des phénomènes d'abrasion résultant des mouvements de l'agrafé métallique 7. Avantageusement, la chaussette 10 est tricotée sous la forme d'un fin tissu élastique et elle présente un diamètre inférieur à celui de l'agrafé 7, de manière à présenter un rappel élastique qui va la maintenir serrée ou pincée naturellement sur l'agrafé 7 et ne pas glisser sur celui-ci en cours d'usage. Avantageusement, le tissage de la chaussette 10 est du type "Jersey".

En variante, le moyen de protection mécanique tel qu'une chaussette 10 peut être remplacé par un enroulement sur plus d'un tour d'un tissu en céramique formé autour de l'agrafé 7. Le nombre de tours de l'enroulement peut être compris entre un et deux.

Par ailleurs, l'agrafé 7 et le moyen de protection mécanique telle la chaussette 10 ou un enroulement d'un tissu céramique peuvent être engagés dans les tubulures amont 3 et aval 5 sur une longueur Lₒ de plusieurs centimètres (figure 1), cette longueur permettant notamment de fixer dans de meilleures conditions les deux coiffes 13 de la partie étanchéité C du flexible sur les tubulures 3 et 5.

## Revendications

1. Flexible de découplage destiné à être monté dans une ligne d'échappement d'un véhicule à moteur, ce flexible comprenant une partie tubulaire interne souple (A) sous la forme d'un agrafé métallique (7) en contact avec le flux des gaz d'échappement, une partie intermédiaire d'isolation thermique (B) et une partie externe d'étanchéité (C), ladite partie d'étanchéité comprenant une couche centrale souple (11) et deux coiffes d'extrémité métalliques destinées à être respectivement fixées sur des tubulures amont (3) et aval (5) par soudage ou au moyen d'une bride, **caractérisé en ce que** chaque coiffe (13) présente une partie centrale (13b) qui est fixée ponctuellement par serrage élastique autour de l'agrafé (7).

2. Flexible de découplage selon la revendication 1, dans lequel la partie centrale (13b) de chaque coiffe (13) est serrée élastiquement autour de l'agrafé (7) sur une longueur supérieure au pas de l'agrafé (7).

3. Flexible de découplage selon la revendication 1 ou 2, dans lequel la partie centrale (13b) de chaque coiffe (13) présente des ondes (15) dont les creux sont en contact avec l'agrafé (7) et qui délimitent des poches (15a) autour de l'agrafé (7) formant une réserve élastique circonférentielle.

4. Flexible de découplage selon la revendication 1 ou 2, dans lequel !e serrage élastique de la partie centrale (13b) de chaque coiffe (13) est assuré par un système de clippage 20.

5. Flexible de découplage selon la revendication 4, dans lequel le système de clippage (20) comprend au moins une bague (22) montée serrée sur l'agrafé (7) et qui présente des protubérances radialement externes (22a) qui viennent en contact ponctuel avec la partie centrale (13b) de chaque coiffe (13).

6. Flexible de découplage selon la revendication 4, dans lequel le système de clippage (20) comprend au moins une bague (22) qui est sertie sur l'agrafé (7) et qui présente des protubérances radialement externes (22a) qui viennent en contact ponctuel avec la partie centrale (13b) de chaque coiffe (13).

7. Flexible de découplage selon la revendication 5 ou 6, dans lequel la partie centrale (13b) est ondulée, et dans lequel les protubérances radialement externes (22a) de la bague (22) viennent au contact d'un creux des ondulations de la partie centrale (13b) de chaque coiffe (13).

8. Flexible de découplage selon l'une des revendications précédentes, dans lequel l'agrafé métallique (7) d'une part et les parties d'extrémité des deux coiffes (13) d'autre part, s'étendent respectivement sur une certaine longueur à l'intérieur et à l'extérieur des deux tubulures métalliques amont et aval (3,5) entre lesquelles le flexible est monté, et dans lequel les extrémités des coiffes (13) sont également fixées sur les tubulures amont et aval (3,5) par soudage par exemple.

9. Flexible de découplage selon l'une quelconque des revendications précédentes, dans lequel un moyen de protection mécanique est monté entre l'agrafé (7) et la partie d'isolation thermique (B).

10. Flexible de découplage selon la revendication 9, dans lequel le moyen de protection mécanique est une chaussette (10) qui s'étend sensiblement sur toute la longueur de l'agrafé (7).

11. Flexible de découplage selon la revendication 10, dans lequel le serrage élastique de chaque coiffe (13) sur l'agrafé (7) s'effectue au travers de la chaussette (10).

12. Flexible de découplage selon la revendication 10 ou 11, dans lequel la chaussette (10) est constituée par un tissu de fibres de céramique.

13. Flexible de découplage selon l'une des revendications 10 à 12, dans lequel la chaussette (10) est tricotée sous la forme d'un tissu de forme "Jersey".

14. Flexible de découplage selon l'une des revendications 10 à 13, dans lequel la chaussette (10) présente un diamètre inférieur à celui de l'agrafé (7) pour être pincée sur celui-ci.

15. Flexible de découplage selon la revendication 14, dans lequel le moyen de protection mécanique est un enroulement d'un tissu de céramique formé autour de l'agrafé (7).

16. Flexible de découplage selon la revendication 15, dans lequel le nombre de tours de l'enroulement du tissu de céramique est compris entre un et deux.

## Claims

1. Flexible decoupling joint which is intended to be mounted in an exhaust line of a motor vehicle, the flexible joint comprising a flexible internal tubular portion (A) in the form of a metal folded joint (7) in contact with the flow of exhaust gases, an intermediate thermal insulation portion (B) and an external sealing portion (C), the sealing portion comprising a flexible central layer (11) and two metal end cover plates which are intended to be fixed to upstream (3) and downstream (5) pipes, respectively, by means of welding or a flange, **characterised in that** each cover plate (13) has a central portion (13b) which is fixed intermittently by resilient clamping around the folded joint (7).

2. Flexible decoupling joint according to Claim 1, wherein the central portion (13b) of each cover plate (13) is resiliently clamped around the folded joint (7) over a length which is greater than the pitch of the folded joint (7).

3. Flexible decoupling joint according to Claim 1 or 2, wherein the central portion (13b) of each cover plate (13) has undulations (15), the indentations of which are in contact with the folded joint (7) and which delimit spaces (15a) around the folded joint (7) forming a circumferential resilient reserve.

4. Flexible decoupling joint according to Claim 1 or 2, wherein the resilient clamping of the central portion (13b) of each cover plate (13) is brought about by a clipping system (20).

5. Flexible decoupling joint according to Claim 4, wherein the clipping system (20) comprises at least one ring (22) which is mounted so as to be clamped on the folded joint (7) and which has radially external protuberances (22a) which come into intermittent contact with the central portion (13b) of each cover plate (13).

6. Flexible decoupling joint according to Claim 4, wherein the clipping system (20) comprises at least one ring (22) which is crimped to the folded joint (7) and which has radially external protuberances (22a) which come into intermittent contact with the central portion (13b) of each cover plate (13).

7. Flexible decoupling joint according to Claim 5 or 6, wherein the central portion (13b) is undulating and wherein the radially external protuberances (22a) of the ring (22) come into contact with an indentation of the undulations of the central portion (13b) of each cover plate (13).

8. Flexible decoupling joint according to any one of the preceding claims, wherein the metal folded joint (7), at one side, and the end portions of the two cover plates (13), at the other side, extend over a given length inside and outside the two upstream and downstream metal pipes (3,5), respectively, between which the flexible joint is mounted, and wherein the ends of the cover plates (13) are also fixed to the upstream and downstream pipes (3,5), for example, by welding.

9. Flexible decoupling joint according to any one of the preceding claims, wherein a mechanical protection means is mounted between the folded joint (7) and the thermal insulation portion (B).

10. Flexible decoupling joint according to Claim 9, wherein the mechanical protection means is a sleeve (10) which extends substantially over the entire length of the folded joint (7).

11. Flexible decoupling joint according to Claim 10, wherein the resilient clamping of each cover plate (13) to the folded joint (7) is effected by means of the sleeve (10).

12. Flexible decoupling joint according to Claim 10 or 11, wherein the sleeve (10) is constituted by a ceramic fibre material.

13. Flexible decoupling joint according to any one of Claims 10 to 12, wherein the sleeve (10) is knitted in the form of a "jersey" type material.

14. Flexible decoupling joint according to any one of Claims 10 to 13, wherein the sleeve (10) has a diameter smaller than that of the folded joint (7) in order to be squeezed thereon.

15. Flexible decoupling joint according to Claim 14, wherein the mechanical protection means is a winding of a ceramic material formed around the folded joint (7).

16. Flexible decoupling joint according to Claim 15, wherein the number of turns of the winding of the ceramic material is between one and two.

## Patentansprüche

1. Flexibles Entkopplungselement zur Montage in der Auspuffanlage eines Kraftfahrzeugs, wobei dieses flexible Entkopplungselement einen biegsamen inneren rohrförmigen Teil (A) in Form einer Metallschelle (7) umfasst, der in Kontakt mit dem Auspuffgasfluss steht, einen thermisch isolierenden Mittelteil (B) und einen dichten Außenteil (c), wobei dieser dichte Teil einen flexiblen mittleren Teil (11) und zwei Metalldeckbleche an den Enden umfasst, die mit den jeweils davor (3) und dahinter liegenden (5) Rohrstutzen durch Schweißen oder durch einen Flansch verbunden werden sollen, **dadurch gekennzeichnet, dass** jedes Deckblech einen mittleren Teil (13b) aufweist, der punktförmig durch elastisches Spannen um die Schelle (7) befestigt ist.

2. Flexibles Entkopplungselement nach Anspruch 1, bei dem der mittlere Teil (13b) jedes Deckblechs (13) elastisch um die Schelle (7) über eine Länge, die die der Schelle (7) überschreitet, gespannt ist.

3. Flexibles Entkopplungselement nach einem der Ansprüche 1 oder 2, bei dem der mittlere Teil (13b) jedes Deckblechs (13) Wellen (15) aufweist, deren Täler mit der Schelle (7) in Kontakt sind und die Ausbuchtungen (15a) um die Schelle (7) begrenzen, wodurch eine umlaufende elastische Aussparung gebildet wird.

4. Flexibles Entkopplungselement nach einem der Ansprüche 1 oder 2, bei dem die elastische Spannung des mittleren Teils (13b) jedes Deckblechs (13) durch ein Klippsystem 20 sicher gestellt wird.

5. Flexibles Entkopplungselement nach Anspruch 4, bei dem das Klippsystem 20 mindestens einen Ring (22) aufweist, der auf der Schelle (7) angezogen ist und externe radiale Vorsprünge (22a) aufweist, die punktuell mit dem mittleren Teil (13b) jedes Deckblechs (13) in Kontakt kommen.

6. Flexibles Entkopplungselement nach Anspruch 4, bei dem das Klippsystem 20 mindestens einen Ring (22) aufweist, der auf der Schelle (7) eingefasst ist und externe radiale Vorsprünge (22a) aufweist, die punktuell mit dem mittleren Teil (13b) jedes Deckblechs (13) in Kontakt kommen.

7. Flexibles Entkopplungselement nach Anspruch 5 oder 6, dessen mittlerer Teil (13b) gewellt ist und bei dem die externen radialen Vorsprünge (22a) des Rings (22) mit einem Wellental im mittleren Teil (13b) jedes Deckblechs in Kontakt kommen.

8. Flexibles Entkopplungselement nach einem der vorstehenden Ansprüche, dessen Metallschelle (7) einerseits und die Endstücke der beiden Deckbleche (13) andererseits sich über eine gewisse Länge innerhalb und außerhalb der beiden davor und dahinter liegenden Metallrohrstutzen (3, 5) erstrecken, zwischen denen das flexible Entkopplungselement montiert ist und bei dem die Endstücke der Deckbleche (13) ebenfalls beispielsweise über Schweißen mit den davor und dahinter liegenden Metallrohrstutzen (3, 5) befestigt sind.

9. Flexibles Entkopplungselement nach einem der vorstehenden Ansprüche, bei dem ein mechanischer Schutz zwischen der Schelle (7) und dem thermisch isolierenden Teil (B) angebracht ist.

10. Flexibles Entkopplungselement nach Anspruch 9, bei dem der mechanische Schutz ein Strumpf (10) ist, der sich etwa über die ganze Länge der Schelle (7) erstreckt.

11. Flexibles Entkopplungselement nach Anspruch 10, bei dem die elastische Spannung jedes Deckblechs (13) auf die Schelle (7) durch den Strumpf (10) ausgeübt wird.

12. Flexibles Entkopplungselement nach Anspruch 10 oder 11, bei dem der Strumpf (10) aus einem Keramikfasergewebe besteht.

13. Flexibles Entkopplungselement nach einem der Ansprüche 10 bis 12, bei dem der Strumpf (10) aus rund gestricktem Gewebe besteht.

14. Flexibles Entkopplungselement nach einem der Ansprüche 10 bis 13, bei dem der Strumpf (10) einen kleineren Durchmesser aufweist, als die Schelle (7), um auf diese geklemmt zu werden.

15. Flexibles Entkopplungselement nach Anspruch 14, bei dem der mechanische Schutz aus einer Wicklung Keramikgewebe um die Schelle (7) besteht.

16. Flexibles Entkopplungselement nach Anspruch 15, bei dem die Anzahl der Wicklungen des Keramikgewebes zwischen 1 und 2 liegt.
